(19) Europäisches Patentamt
European Patent Office
Office européen des brevets

(11) **EP 2 856 633 B1**

(12) **EUROPÄISCHE PATENTSCHRIFT**

(45) Veröffentlichungstag und Bekanntmachung des Hinweises auf die Patenterteilung:
**05.07.2017  Patentblatt 2017/27**

(21) Anmeldenummer: **13725131.0**

(22) Anmeldetag: **22.05.2013**

(51) Int Cl.:
***H02P 21/06*** (2016.01)

(86) Internationale Anmeldenummer:
**PCT/EP2013/060436**

(87) Internationale Veröffentlichungsnummer:
**WO 2013/174827 (28.11.2013 Gazette 2013/48)**

(54) **VERFAHREN ZUR REGELUNG DES DREHMOMENTS EINER ASYNCHRONMASCHINE**

METHOD FOR CONTROLLING THE TORQUE OF AN INDUCTION MACHINE

PROCEDE POUR COMMANDER LE COUPLE D'UNE MACHINE ASYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2012  AT 502002012**

(43) Veröffentlichungstag der Anmeldung:
**08.04.2015  Patentblatt 2015/15**

(73) Patentinhaber: **Voith Turbo GmbH**
**3100 St. Pölten (AT)**

(72) Erfinder: **GLASL, Markus**
**A-3105 Unterradlberg (AT)**

(74) Vertreter: **Patentanwälte Pinter & Weiss OG**
**Prinz-Eugen-Straße 70**
**1040 Wien (AT)**

(56) Entgegenhaltungen:
CN-A- 102 364 871    DE-A1- 3 903 536
US-A- 5 371 458

- CRISTIAN LASCU ET AL: "A Modified Direct Torque Control for Induction Motor Sensorless Drive", IEEE TRANSACTIONS ON INDUSTRY APPLICATIONS, IEEE SERVICE CENTER, PISCATAWAY, NJ, US, vol. 36, no. 1, 1 January 2000 (2000-01-01), XP011022702, ISSN: 0093-9994

**Beschreibung**

Die gegenständliche Erfindung betrifft ein Verfahren zur Steuerung des Drehmomentes einer Asynchronmaschine.

Über einen Wechselrichter betriebene Asynchronmotoren werden häufig nach dem Prinzip der feldorientierten Regelung geregelt. Die Grundidee der feldorientierten Regelung besteht bekanntermaßen darin, die elektrische Maschine in einem mit dem magnetischen Fluss mitrotierendem Koordinatensystem zu betrachten, das sich am magnetischen Fluss orientiert. Der Statorstrom kann dann in eine feldbildende Stromkomponente in Richtung des Flusses, und eine drehmomentbildende Stromkomponente normal auf die Richtung des Flusses zerlegt werden. Aus den Sollwerten für Drehmoment und Magnetfluss werden die entsprechenden Sollwerte für die drehmomentenbildende und feldbildende Stromkomponente bestimmt. Im einfachsten Fall wird mit je einem PI-Regler für jede Stromkomponente der einzustellende Spannungsraumzeiger im drehfeldfesten Koordinatensystem ermittelt. Durch eine Koordinatentransformation wird der einzustellende Spannungsraumzeiger im statorfesten Koordinatensystem berechnet und mit einem geeigneten Puls-Modulationsverfahren werden daraus die Ansteuersignale für die drei Halbbrücken des Wechselrichters ermittelt. Neben der Berechnung der feldbildenden und drehmomentbildenden Sollstromkomponenten kommt der Bestimmung des aktuellen Flusses in der Asynchronmaschine die zentrale Bedeutung bei der Umsetzung der feldorientierten Regelung zu. Da der Fluss einer direkten robusten und störunempfindlichen Messung nicht zugänglich ist, wird ein so genanntes Flussmodell verwendet, um aus den gemessenen Strömen und der an den Motor gelegten Spannung den Fluss zu berechnen bzw. regelungstechnisch zu beobachten.

Hinsichtlich der konkreten Umsetzung gibt es verschiedene Realisierungsarten der feldorientierten Regelung. Grundsätzlich ist sowohl die Feldorientierung am Rotorfluss als auch am Statorfluss möglich. Für erstere Variante ergeben sich einfachere Gleichungen, so dass häufig die Feldorientierung am Rotorfluss bevorzugt gewählt wird.

Aus der EP 674 381 A1 ist ein Verfahren zur Drehmomentregelung einer Asynchronmaschine bekannt, das sich am Statorfluss orientiert und mit einer Pulsbreitenmodulation den Statorfluss auf einer Kreisbahn führt. Das Verfahren geht von einem Flussmodell aus, das den Stator- und Rotorfluss aus den gemessenen Strömen und der angelegten Spannung im statorfesten Koordinatensystem beobachtet. Die Regelung orientiert sich am Statorfluss und ermittelt eine in Richtung des Statorflusses weisende Spannungskomponente und eine darauf normal stehende Spannungskomponente. In der einfachsten Ausführung wird die in Richtung des Statorflusses weisende Spannungskomponente direkt vom Ausgang eines als Feldregler wirkenden PI-Reglers bestimmt, dem die Regelabweichung zwischen dem aktuellen Statorflussbetrag und seinem Sollwert zugeführt wird. Die Normalspannungskomponente wird direkt vom Ausgang eines weiteren als Drehmomentregler wirkenden PI-Reglers bestimmt, dem am Eingang die Regelabweichung zwischen der aktuellen Rotorkreisfrequenz und ihrem Sollwert zugeführt wird. Der solcherart ermittelte Statorspannungsraumzeiger wird in das statorfeste Koordinatensystem transformiert und mit einem Pulsbreitenmodulationsverfahren an den Klemmen der Maschine eingeprägt. Durch Vorsteuerung der Reglerausgänge werden die PI-Regler statisch und dynamisch entlastet, so dass ihnen schließlich nur mehr die Aufgabe zukommt, verbleibende Fehler in der Vorsteuerung auszuregeln. Der Rotorfrequenzsollwert wird derart begrenzt, dass einerseits der Statorstrom auf zulässige Werte begrenzt bleibt (Strombegrenzung) und andererseits die Asynchronmaschine nicht kippt (Kippschutz).

Aus der Offenlegungsschrift DE 103 36 068 A1 ist ein feldorientiertes Verfahren zur gesteuerten Einprägung des Ständerstromes und Drehmomentes einer stromrichtergespeisten Drehfeldmaschine bekannt. Dabei werden in einem am Rotorfluss orientierten Koordinatensystem die feld- und momentenbildenden Stromkomponenten aus dem Drehmomentsollwert und dem Rotorfluss-Sollwert sowie die Ständerkreisfrequenz bestimmt, wobei ein Flussmodell den dazu benötigten Rotorfluss-Istwert bestimmt. Mit den Stromkomponenten und den Maschinenparametern wird anstelle des Ständerspannungsraumzeigers ein so genannter Klemmenfluss-Sollwert berechnet, der die vom Wechselrichter einzuprägende Spannungs-Zeitfläche (also das Integral der Klemmenspannung) angibt. Im Pulsmustergenerator wird nun die vom Klemmenfluss-Sollwert vorgegebene Flussbahnkurve mit Hilfe off-line abgespeicherter optimierter Flussbahnkurven in die Maschine eingeprägt. Man erhält damit eine augenblickswertorientierte Regelung der Lage des Ständerstromes zum Rotorfluss, wodurch die Motorströme und das Drehmoment der Drehfeldmaschine stationär und dynamisch exakt gesteuert werden. Das Verfahren kombiniert die hohe Regeldynamik direkt schaltender Verfahren mit dem optimalen stationären Verhalten von off-line optimierten Pulsmustern.

In der DE 39 03 536 A1 wird ein Verfahren zur Regelung des Drehmoments einer Asynchronmaschine beschrieben, welches mit einer direkten Selbstregelung mit Schaltreglern arbeitet. Hierbei wird abhängig vom Fluss- und Drehmomenten-Istwert direkt der an die Maschine anzulegenden Spannungsraumzeiger bestimmt. Es wird bei der Herleitung der mathematischen Zusammenhänge der Statorfluss in eine d-Komponente in Richtung des Rotorflusses und eine q-Komponente quer zum Rotorfluss zerlegt, was jedoch aber nur zur Herleitung des Zusammenhangs zwischen Drehmoment und dem Winkel zwischen Rotor- und Statorfluss dient.

Die US 5,371,458 A beschreibt wiederum ein Verfahren, wie aus Messwerten von Statorstrom und Statorspannung der Statorfluss berechnet werden kann, um das Drehmoment einer Asynchronmaschine regeln zu können.

Gemeinsam ist den bekannten Verfahren, dass sie zur Bestimmung der Lage des Rotorflusses ein Flussmodell, bestehend aus einem Spannungs- und einem Strommodell, verwenden, das aus den gemessenen Strömen und der vom Wechselrichter eingeprägten Spannung den Rotor- und Statorfluss berechnet, was im Allgemeinen in einem statorfesten Koordinatensystem erfolgt. Die vom Wechselrichter einzuprägende Spannung bzw. Spannungs-Zeitfläche wird dabei durch Regler in drehfeldfesten Koordinaten berechnet. Diese Verfahren basieren auf einer Feedback-Regelung, wobei die Regler zwecks dynamischer Entlastung basierend auf inversen Maschinenmodellen vorgesteuert werden können. Es sind daher sowohl für den gemessenen Stromraumzeiger als auch den Stellgrößenvektor Koordinatentransformationen zwischen dem drehfeld- und statorfesten System erforderlich, was zusätzlich Rechenzeit benötigt. Feedback-Regelungen haben zwar den Vorteil, dass Fehler im Maschinenmodell oder in der Parametrierung des Maschinenmodells durch die Regelung ausgeglichen werden und somit versteckt werden. Gleichzeitig sind damit aber Modellfehler nur sehr schwer zu identifizieren.

Ausgehend davon ist es eine Aufgabe der gegenständlichen Erfindung, ein Verfahren zur Steuerung des Drehmoments der Asynchronmaschine im statorfesten Koordinatensystem anzugeben, ohne das bekannte auf dem Spannungs- und Strommodell basierende Flussmodell zu verwenden. Dabei soll trotzdem eine hohe Drehmomentendynamik und - genauigkeit der Drehmomentenregelung erreichbar sein.

Diese Aufgabe wird erfindungsgemäß dadurch gelöst, indem in statorfesten Koordinaten $(\alpha, \beta)$ ausgehend von einem im nächsten Abtastschritt $(n+1)$ anzulegenden Streuflussvektor $(\Delta\psi\_(n+1))$, einer gemessenen mechanischen Kreisfrequenz $(\omega_m)$ und einem aktuellen Rotorfluss $(\psi_R(nT_m))$ und Statorfluss $(\psi_s(nT_a))$ ein im nächsten Abtastschritt $(n+1)$ auszuführende Statorflussschritt $(\delta\psi_s(nT_a + T_a))$ zur Erreichung eines Soll-Drehmoments, sowie ein Rotorfluss $(\psi_R(nT_a + T_a))$ und Statorfluss $(\psi_S(nT_a + T_a))$ für den nächsten Abtastschritt $(n+1)$ berechnet wird. Damit ergibt sich eine Feedforward-Regelung in statorfesten Koordinaten, womit auf ein separates Flussmodell zur Bestimmung des Rotorflusses verzichtet werden kann. Auf diese Weise ergibt sich eine hochdynamisch vorgesteuerte Regelung der Asynchronmaschine, die in der Drehmomentendynamik unmittelbar dem Sollwert folgt. Dies ermöglicht es auch, die Asynchronmaschine allein auf Basis der Zustandsgrößen (des Flusses), und vor allem ohne die Ströme und Spannungen an der Maschine explizit berechnen zu müssen, zu steuern. Aufgrund des Bezuges auf das statorfeste Koordinatensystem, tritt in den Maschinengleichungen keine Differenzierung der Flussgrößen auf. Differenzierung lässt sich immer nur näherungsweise berechnen und führt tendenziell zu einer Verstärkung von Messrauschen. Weiters kann dadurch die Koordinatentransformationen der Stellgröße zwischen drehfeldfestem und statorfestem Koordinatensystem entfallen und der ermittelte Statorflussschritt im statorfesten Koordinatensystem kann unmittelbar in die Stellbefehle des Wechselrichters umgesetzt werden, ohne zuvor einen Spannungsraumzeiger berechnen zu müssen.

Die Nachführung der Parameter des Maschinenmodells, was bei einer Feedforward-Regelung im Normalfall notwendig ist, kann problemlos erfolgen, da sich die Parameter nur langsam ändern und folglich nicht mit hoher Häufigkeit, und damit geringen Rechneranforderungen, aktualisiert werden müssen.

Letztendlich ist auch ein für die Feedforward-Regelung zu bevorzugendes möglichst exaktes Maschinenmodell der Asynchronmaschine, das das physikalische Verhalten unmittelbar wiedergibt, ein sehr hoch einzuschätzender Vorteil, da es dadurch ermöglicht wird, weitere Größen aus dem Maschinenmodell abzuleiten und nicht zu messen. Auf diese Weise könnte z.B. auf bestimmte Sensoren verzichtet werden.

Weitere vorteilhafte Ausgestaltungen und Vorteile der Erfindung ergeben sich aus den Unteransprüchen, sowie der nachfolgenden Beschreibung der Erfindung.

Die gegenständliche Erfindung wird nachfolgend unter Bezugnahme auf die Figuren 1 bis 4, die beispielhaft und schematisch vorteilhafte Ausgestaltungen der Erfindung zeigen, näher erläutert. Dabei zeigt

Fig.1 ein Schemabild eines Traktionsantriebes eines Schienenfahrzeugs mit einer Asynchronmaschine,
Fig.2 das der Reglung zugrunde liegende Maschinenmodell einer Asynchronmaschine,
Fig.3 ein Blockschaltbild der erfindungsgemäßen Regelung und
Fig.4 ein Blockschaltbild einer Strombegrenzungseinrichtung und einer Kippbegrenzungseinrichtung.

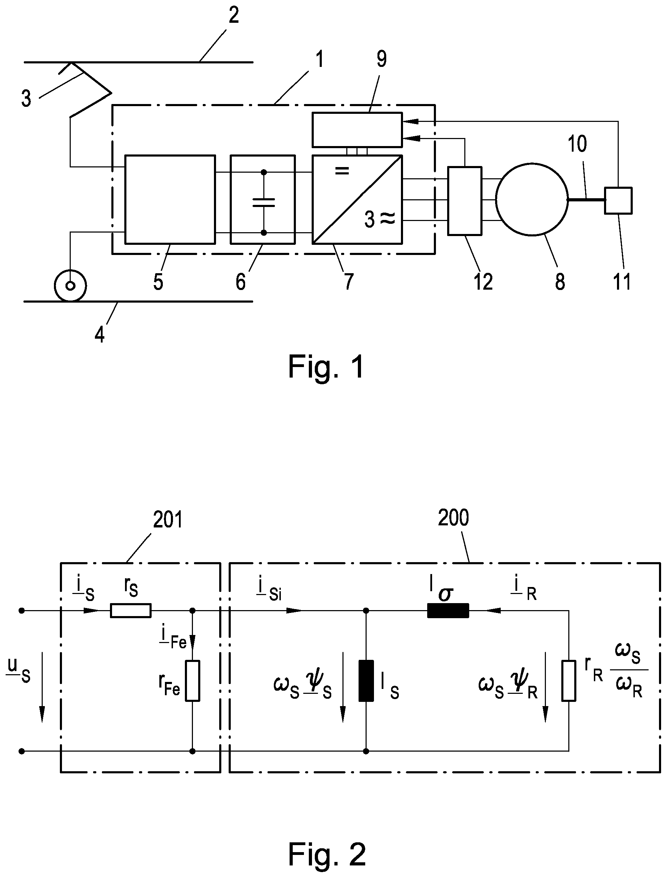

Figur 1 zeigt beispielhaft einen Traktionsantrieb eines Schienenfahrzeugs. Der Drehstrom-Asynchronmotor 8 des Schienenfahrzeugs wird über einen Traktionsstromrichter 1 mit einem Spannungszwischenkreis-Wechselrichter angesteuert. Dabei wird der Spannungszwischenkreis 6 des Traktionsstromrichters 1 über eine Einspeiseschaltung 5 an die mit dem Stromabnehmer 3 abgegriffene, zwischen der Oberleitung 2 und der Schiene 4 anliegende Spannung gelegt. Falls erforderlich wandelt die Einspeiseschaltung 5 die Eingangsspannung in eine geeignete Gleichspannung um, die am Spannungszwischenkreis 6 den Wechselrichter 7 anspeist. Ziel ist es dabei, den Wechselrichter 7 des Traktionsstromrichters 1 mit einer Regelungseinrichtung 9 so anzusteuern, dass an den Klemmen des Asynchronmotors 8 eine Drehspannung variabler Amplitude und Frequenz in der Weise erzeugt wird, dass der Asynchronmotor 8 an seiner Welle 10 das gewünschte Drehmoment sowohl statisch als auch dynamisch erzeugt. Dabei sind im Normalfall auch die Begrenzungen des Wechselrichters 7 hinsichtlich der maximal einstellbaren Ausgangsspannung, des zulässigen Ausgangsstromes und der zulässigen Schaltfrequenz einzuhalten, und der Ausgangsstrom mit Rücksicht auf die Verluste in Wechselrichter 7 und Asynchronmotor 8 so klein als möglich zu halten. Der Regelungseinrichtung 9 stehen die mit einem Drehgeber 11 erfasste Drehzahl des Antriebes sowie die mit einer Messeinrichtung 12 erfassten Motorströme als Istwerte zur Verfügung. Die gegenständliche Erfindung ist aber natürlich nicht auf Traktionsantriebe beschränkt, sondern kann generell für die Regelung eines Asynchronmotors eingesetzt werden.

Bei bekannten feldorientierten Regelungsverfahren wird die Asynchronmaschine in einem mit dem Statorfeld mitlaufenden drehfeldfesten Koordinatensystem beschrieben, und der Statorstrom durch die Regelung eingeprägt. Daher wird bevorzugt ein Ersatzschaltbild der Asynchronmaschine 8 verwendet, bei dem die Streuinduktivität zur Gänze dem Stator zugeschlagen wird. Im Gegensatz dazu wird die Asynchronmaschine 8 hier durch Gleichungen in einem statorfesten Koordinatensystem ($\alpha$, $\beta$) beschrieben, z.B. basierend auf dem in Fig.2 dargestellten Ersatzschaltbild. Hier wird die Streuinduktivität zur Gänze dem Rotor zugeschlagen und die Eisenverluste werden durch einen parallel zur Statorinduktivät angeordneten ohmschen Widerstand berücksichtigt. Wie aus Fig.2 ersichtlich ist, wird das Maschinenmodell in zwei Teilmodelle zerlegt, wobei das "innere" Teilmodell 200 "hinter dem Statorwiderstand" als Modell einer idealisierten Maschine ohne Statorwiderstand und ohne Eisenverluste aufgefasst werden kann. Das "äußere" Teilmodell 201 bildet die Statorkupferverluste und Eisenverluste ab. Dieser Modellansatz ermöglicht es, die Eisenverluste in relativ einfacher Weise zu berücksichtigen, während die übrigen Gleichungen des "inneren" Teilmodells unverändert gegenüber einem Maschinenmodell ohne Berücksichtigung der Eisenverluste bleiben. Ausgehend von diesem Maschinenmodell, wird die Dynamik der Asynchronmaschine 8 durch die folgenden Gleichungen beschrieben Statormasche:

$$\underline{u}_S = r_S\left(\underline{i}_{Si} + \underline{i}_{Fe}\right) + \frac{d\underline{\psi}_S}{d\tau} \qquad \text{Gl. (1)}$$

Rotormasche:

$$\underline{0} = r_R\underline{i}_R + \frac{d\underline{\psi}_R}{d\tau} - j\omega_m\underline{\psi}_R \qquad \text{Gl. (2)}$$

Statorflussverkettung:

$$\underline{\psi}_S = l_S\left(\underline{i}_{Si} + \underline{i}_R\right) \qquad \text{Gl. (3)}$$

Rotorflussverkettung:

$$\underline{\psi}_R = l_S\underline{i}_{Si} + \left(l_S + l_\sigma\right)\underline{i}_R \qquad \text{Gl. (4)}$$

Drehmoment:

$$m = -\text{Im}\left(\underline{i}_{Si}^{*}\underline{\psi}_S\right) \qquad \text{Gl. (5)}$$

wobei den einzelnen Größen die folgende Bedeutung zukommt:

$\underline{u}_s$    komplexer Statorspannungsraumzeiger

$\underline{i}_s$    komplexer Statorstromraumzeiger

$\underline{i}_{si}$    komplexer Statorstromraumzeiger des inneren Teilmodells

$\underline{i}_{Si}^{*}$    konjugiert komplexer Statorstromraumzeiger des inneren Teilmodells

$i_R$    komplexer Rotorstromraumzeiger

$\underline{i}_{Fe}$    komplexer Stromraumzeiger der die Eisenverluste nachbildet

$\underline{\psi}_S$    komplexer Statorflussverkettungsraumzeiger

$\underline{\psi}_R$    komplexer Rotorflussverkettungsraumzeiger

$r_S$    Statorwiderstand

$r_R$    Rotorwiderstand

$l_S$    Statorinduktivität

$l_\sigma$    Streuinduktivität rotorseitig konzentriert

$\tau$    normierte Zeit

$\omega_m$    mechanische Kreisfrequenz der Asynchronmaschine

$j$    imaginäre Einheit $j = \sqrt{-1}$

Durch Umformung erhält man aus diesen Gleichungen eine Differentialgleichung für die Rotoflussverkettung $\underline{\psi}_R$, wobei für die Streuflussverkettung $\underline{\Delta\psi} = \underline{\psi}_S - \underline{\psi}_R$ gilt.

$$\frac{d\underline{\psi}_R}{d\tau} = j\omega_m\underline{\psi}_R + \frac{r_R}{l_\sigma}\underline{\Delta\psi} \qquad \text{Gl. (6)}$$

Daraus ist ersichtlich, dass die Streuflussverkettung $\underline{\Delta\psi}$ unmittelbar als Stellgröße zur Steuerung des Rotorflusses herangezogen werden kann. Der Rotorfluss in der Asynchronmaschine ist demgemäß durch eine in die Richtung des Rotorflusses, z.B. gegeben durch den Einheitsvektor $\underline{e}_{\psi_R} = \frac{\underline{\psi}_R}{|\underline{\psi}_R|}$, orientierte - d.h. feldorientierte Vorgabe - der Streuflussverkettung

$$\underline{\Delta\psi} = \left(\Delta\psi_x + j\Delta\psi_y\right)\underline{e}_{\psi_R}, \qquad \text{Gl. (7)}$$

steuerbar, wobei die in Richtung des Rotorflusses zeigende Streuflusskomponente $\Delta\psi_x$ feldbildend und die normal auf den Rotorfluss stehende Streuflusskomponente $\Delta\psi_y$ dreh-momentbildend wirkt.

Schreibt man nun anstelle der komplexen Raumzeiger $\underline{\psi}_R = \psi_{R\alpha} + j\psi_{R\beta}$ und $\underline{\Delta\psi} = \Delta\psi_\alpha + j\Delta\psi_\beta$ den Rotorflussvektor (Zustandsvektor) $\psi_R = (\psi_{R\alpha}\ \psi_{R\beta})^T$ und den Streuflussvektor (Stellgrößenvektor) $\Delta\psi = (\Delta\psi_\alpha\ \Delta\psi_\beta)^T$ in statorfesten Koordinaten $(\alpha, \beta)$, so folgt aus der elementaren Gl. (6) unmittelbar die zeitkontinuierliche Zustandsraumdarstellung des Rotorflussintegrators in statorfesten Koordinaten $(\alpha, \beta)$:

$$\frac{d}{d\tau}\boldsymbol{\psi}_R = \mathbf{A}_c\boldsymbol{\psi}_R + \mathbf{B}_c\boldsymbol{\Delta\psi} \qquad \text{Gl. (8)}$$

mit der Systemmatrix $\mathbf{A}_c = \begin{pmatrix} 0 & -\omega_m \\ \omega_m & 0 \end{pmatrix}$ und der Steuermatrix $\mathbf{B}_c = \frac{r_R}{l_\sigma}\begin{pmatrix} 1 & 0 \\ 0 & 1 \end{pmatrix}$. Die Ansteuerung des Wechselrichters soll mit einem Pulsmuster erfolgen, das den Streuflussvektor (Stellgrößenvektor) $\Delta\psi$ in zeitlich diskretisierten Abtastschritten $nT_a$, mit der Abtastzeit $T_a$, in die Maschine einprägt. Aus der zeitkontinuierlichen Zustandsraumdarstellung wird daher eine äquivalente zeitdiskrete Zustandsraumdarstellung berechnet, die gemäß

$$\boldsymbol{\psi}_R\left(nT_a + T_a\right) = \mathbf{A}_d\boldsymbol{\psi}_R\left(nT_a\right) + \mathbf{B}_d\boldsymbol{\Delta\psi}_-\left(nT_a + T_a\right) \qquad \text{Gl. (9)}$$

den Rotorflussvektor $\psi_R(nT_a + T_a)$ am Ende des nächsten Abtastschrittes (n+1) aus dem Rotorflussvektor $\psi_R(nT_a)$ des aktuellen Abtastschrittes (n) und dem im nächsten Abtastintervall (n+1) anzulegenden Streuflussvektor (Stellgrößenvektor) $\Delta\psi_-(nT_a + T_a)$ berechnet. Die Schreibweisen (n) und $(nT_a)$, sowie (n+1) und $(nT_a+T_a)$ sind hierbei als gleich anzusehen. Das Minus im Index weist darauf hin dass in Gl. (9) der Stellgrößenvektor $\Delta\psi$ in seiner Orientierung zu Beginn des Abtastintervalls, also zum Abtastzeitpunkt $nT_a$ einzusetzen ist. Die Berechnung der zeitdiskreten Systemmatrix $\mathbf{A}_d$ und Steuermatrix $\mathbf{B}_d$ ist ein regelungstechnisches Standardproblem, das hier nicht im Detail ausgeführt wird.

Für die zeitdiskretisierte Systemmatrix $\mathbf{A}_d = \begin{pmatrix} \cos\omega_m T_a & -\sin\omega_m T_a \\ \sin\omega_m T_a & \cos\omega_m T_a \end{pmatrix}$ erhält man eine Drehmatrix, die den Rotorflussvektor um den Winkel $\omega_m T_a$ dreht, wobei $\omega_m$ z.B. mit dem Drehgeber 11 erfasst wird. Das entspricht der mechanische Drehung des Rotors während des Abtastintervalls. Mit dem Verlauf des Stellgößenvektors während der Abtastperiode (gleich bleibender Betrag bei gleichförmiger Drehbewegung um den Winkel $\omega_S T_a$, mit der Statorkreisfrequenz $\omega_S$) berechnet sich die zeitdiskretisierte Steuermatrix zu

$$\mathbf{B_d} = T_a \frac{r_R}{l_\sigma} \frac{\sin\left(\dfrac{\omega_S - \omega_m}{2} T_a\right)}{\dfrac{\omega_S - \omega_m}{2} T_a} \begin{pmatrix} \cos\left(\dfrac{\omega_S + \omega_m}{2} T_a\right) & -\sin\left(\dfrac{\omega_S + \omega_m}{2} T_a\right) \\ \sin\left(\dfrac{\omega_S + \omega_m}{2} T_a\right) & \cos\left(\dfrac{\omega_S + \omega_m}{2} T_a\right) \end{pmatrix}.$$

Der Streuflussvektor (Stellgrößenvektor) führt während des Abtastintervalls eine gleichförmige Drehbewegung

$$\Delta\boldsymbol{\psi}(\tau) = \begin{pmatrix} \cos\omega_S\tau & -\sin\omega_S\tau \\ \sin\omega_S\tau & \cos\omega_S\tau \end{pmatrix} \Delta\boldsymbol{\psi}_-\left(nT_a + T_a\right) \text{ mit}$$

$$\tau \in \begin{bmatrix} 0 & T_a \end{bmatrix}$$

Gl. (10)

aus und hat sich bis zum Ende des Abtastintervalls ($\tau = T_a$) um den Winkel $\omega_S T_a$ weitergedreht. Daher gilt für den Stellgrößenvektor $\Delta\psi_+$ am Ende des nächsten Abtastintervalls

$$\Delta\boldsymbol{\psi}_+\left(nT_a + T_a\right) = \mathbf{A}_\Delta \Delta\boldsymbol{\psi}_-\left(nT_a + T_a\right)$$

Gl. (11)

mit der Drehmatrix $\mathbf{A}_\Delta = \begin{pmatrix} \cos\omega_S T_a & -\sin\omega_S T_a \\ \sin\omega_S T_a & \cos\omega_S T_a \end{pmatrix}$. Aus der Streuflussverkettung $\underline{\Delta\psi} = \underline{\psi}_S - \underline{\psi}_R$ und Gl. (11) berechnet sich der Statorflussvektor $\psi_S(nT_a + T_a)$ am Ende des nächsten Abtastintervalls zu

$$\boldsymbol{\psi}_\mathbf{S}\left(nT_a + T_a\right) = \boldsymbol{\psi}_\mathbf{R}\left(nT_a + T_a\right) + \mathbf{A}_\Delta \Delta\boldsymbol{\psi}_-\left(nT_a + T_a\right).$$

Gl. (12)

Während des nächsten Abtastintervalls muss der Statorflussvektor $\psi_S(nT_a + T_a)$ folglich den Statorflussschritt

$$\delta\boldsymbol{\psi}_\mathbf{S}\left(nT_a + T_a\right) = \boldsymbol{\psi}_\mathbf{S}\left(nT_a + T_a\right) - \boldsymbol{\psi}_\mathbf{S}\left(nT_a\right)$$

Gl. (13)

ausführen um den gewünschten Streuflussvektor (Stellgrößenvektor) $\Delta\psi$ in die Asynchronmaschine 8 einzuprägen.

Aus den Gleichungen Gl. (13), Gl. (12) und Gl. (9) ergibt sich daher unmittelbar, wie in statorfesten Koordinaten $(\alpha,\beta)$ ausgehend vom aktuellen Rotorfluss $\psi_R(nT_a)$ der im nächsten Abtastschritt $(nT_a + T_a)$ auszuführenden Statorflussschritt $\delta\psi_S(nT_a + T_a)$ berechnet werden kann.

Aus der Statorspannungsgleichung Gl. (1) ist ersichtlich, wie die Statorflussverkettung $\underline{\psi}_S$ über den an den Maschinenklemmen angelegten Spannungsraumzeiger $\underline{u}_S$ beeinflusst werden kann. Durch integrieren dieser Gleichung

über das Abtastintervall $T_a$ erhält man $\underline{\psi}_S\left(nT_a + T_a\right) = \displaystyle\int_{nT_a}^{nT_a + T_a} \underline{u}_S \, d\tau - \int_{nT_a}^{nT_a + T_a} r_S\left(\underline{i}_{Si} + \underline{i}_{Fe}\right) d\tau + \underline{\psi}_S\left(nT_a\right)$ woraus für den

Statorflussschritt $\delta\psi_S(nT_a + T_a)$ des Statorflussvektors in Vektorenschreibweise

$$\boldsymbol{\delta\psi}_\mathbf{S}\left(nT_a + T_a\right) = \boldsymbol{\psi}_\mathbf{S}\left(nT_a + T_a\right) - \boldsymbol{\psi}_\mathbf{S}\left(nT_a\right) = \int_{nT_a}^{nT_a + T_a} \mathbf{u}_\mathbf{S} \, d\tau - \int_{nT_a}^{nT_a + T_a} r_S\left(\mathbf{i}_{\mathbf{Si}} + \mathbf{i}_{\mathbf{Fe}}\right) d\tau$$ folgt. Der angeforderte Statorflussschritt $\delta\psi_S(nT_a + T_a)$ kann somit von einem Pulsmustergenerator eingeprägt werden, wenn der Wechselrichter 7 an den Motorklemmen im nächsten Abtastintervall $(nT_a+T_a)$ eine Spannungszeitfläche

$$\int_{nT_a}^{nT_a+T_a}\mathbf{u_S}d\tau = \boldsymbol{\delta\psi_S}\left(nT_a+T_a\right)+\int_{nT_a}^{nT_a+T_a}r_S\left(\mathbf{i_{Si}}+\mathbf{i_{Fe}}\right)d\tau$$ anlegt, die gleich dem angestrebten Statorflussschritt $\delta\psi_S(nT_a +$

$T_a)$ zuzüglich des Integrals des ohmschen Statorspannungsabfalls über das Abtastintervall ist. Aus dem Stand der Technik sind zahlreiche Pulsverfahren zur Einprägung eines mittleren Statorspannungsraumzeigers $\overline{\mathbf{u}}_S$ über ein Schaltintervall der Dauer $T_a$ bekannt. Diese Verfahren sind grundsätzlich auch zur Realisierung eines statorflusseinprägenden Stellgliedes geeignet, wenn der mittlere Statorspannungsraumzeiger aus dem Statorflussschritt $\delta\psi_S(nT_a + T_a)$ zu

$$\overline{\mathbf{u}}_S = \frac{1}{T_a}\int_{nT_a}^{nT_a+T_a}\mathbf{u_S}d\tau = \frac{1}{T_a}\boldsymbol{\delta\psi_S}\left(nT_a+T_a\right)+r_S\overline{\mathbf{i}}_S$$   mit   dem   mittleren   Statorstromraumzeiger

$$\overline{i}_\mathbf{S} = \frac{1}{T_a}\int_{nT_a}^{nT_a+T_a}r_S\left(\mathbf{i_{Si}}+\mathbf{i_{Fe}}\right)d\tau$$ berechnet wird. Der Statorstromraumzeiger des inneren Teilmodells hinter dem Stator

widerstand kann dann mit den Flussverkettungsgleichungen Gl. (3) und Gl. (4) aus den Flussverkettungsraumzeigern zu

$$\mathbf{i_{Si}} = \frac{l_S+l_\sigma}{l_S l_\sigma}\boldsymbol{\psi}_\mathbf{S} - \frac{1}{l_\sigma}\boldsymbol{\psi}_\mathbf{R} \qquad \text{Gl. (14)}$$

berechnet werden.

Die Vorgabe geeigneter, am Rotorfluss orientierter Streuflusskomponenten ($\Delta\psi_x$, $\Delta\psi_y$), siehe Gl. (7), ergibt sich, indem die feldbildende Streuflusskomponente $\Delta\psi_x$ von einem proportional wirkendem Flussregler aus

$\Delta\psi_x = k_{p,Flussregler}(|\psi_\mathbf{R}| - |\psi_R|_{Soll})$ mit $\left|\boldsymbol{\psi}_\mathbf{R}\right| = \sqrt{\psi_{R\alpha}^2 + \psi_{R\beta}^2}$ ermittelt wird. Die Proportionalverstärkung $k_p$ des Flussreglers bestimmt bekanntermaßen einerseits die Dynamik der Flussregelung (je höher $k_p$, umso rascher wird der gewünschte Flusswert eingestellt), die erforderliche Stellgröße (je höher $k_p$, umso größer wird der erforderliche Statorspannungsschritt bei Flussabweichungen) und die Störempfindlichkeit (wenn der Rotorflussbetrag "rauscht", so wird bei großem $k_p$ dieses Rauschen auf die Stellgröße übertragen). Zusammenfassend wird $k_p$ wie bei jedem proportional wirkenden Regler als Kompromiss zwischen einer guten Führungsdynamik und der erforderlichen Störungsunterdrückung eingestellt. Die drehmomentbildende Streuflusskomponente $\Delta\psi_y$ wird aus der Momentengleichung Gl. (5) bestimmt. Drückt man in Gl. (5) den Statorstrom gemäß Gl. (14) durch die Flussverkettungen aus, so ergibt sich das Drehmoment nach kurzer Rechnung zu $m = \frac{1}{l_\sigma}\text{Im}\left(\underline{\psi}_R^*\underline{\psi}_S\right) = -\frac{1}{l_\sigma}\text{Im}\left(\underline{\psi}_S^*\underline{\psi}_R\right)$. Berücksichtigt man nun noch $\underline{\psi}_S = \underline{\psi}_R + \Delta\underline{\psi}$, so erhält man mit $\Delta\underline{\psi} = \Delta\psi_x + j\Delta\psi_y$ in drehfeldfesten Statorkoordinaten (x,y), in dem definitionsgemäß $\psi_{Rx} = |\underline{\psi}_R|$ und $\psi_{Ry} = 0$ gilt, das Drehmoment zu $m = \frac{1}{l_\sigma}\Delta\psi_y\left|\underline{\psi}_R\right|$. Um ein gewünschtes Drehmoment $m_{Soll}$ zu erzeugen, muss daher die drehmomentenbildende Komponente $\Delta\psi_y$ des Streuflusses zu

$$\Delta\psi_y = l_\sigma m_{Soll}\frac{1}{\left|\underline{\psi}_R\right|} \qquad \text{Gl. (15)}$$

vorgegeben werden. Zusätzlich kann daraus noch die Statorkreisfrequenz $\omega_S$ zu $\omega_S = \omega_m + r_R\dfrac{m_{Soll}}{\left|\underline{\psi}_R\right|^2}$ berechnet werden.

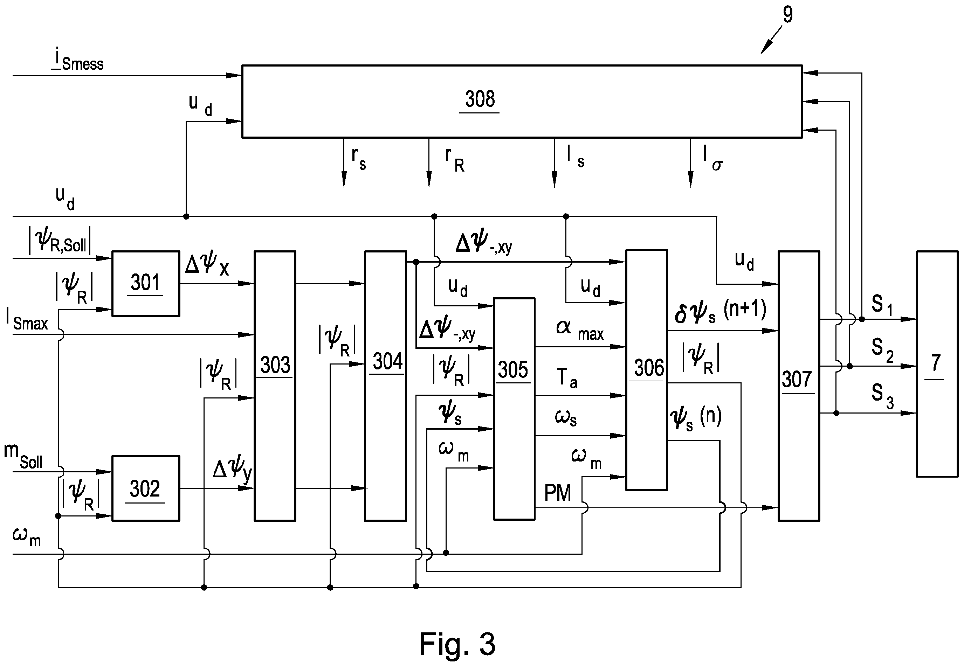

Damit lässt sich eine Feedforward-Regelung des Drehmoments m der Asynchronmaschine 8 realisieren, wie nachfolgend unter Bezugnahme auf die Fig.3 in einer vorteilhaften Ausgestaltung beschrieben wird.

Ein Flussregler 301 berechnet gemäß obigen Ausführungen für den aktuellen Abtastschritt $nT_a$ aus der Abweichung des von einem Flussintegrator 306 ermittelten Rotorflussbetrages $|\psi_\mathbf{R}|$ vom vorgegebenen Sollwert $|\psi_R|_{Soll}$ die feldbildende Streuflusskomponente $\Delta\psi_x$ in drehfeldfesten Statorkoordinaten. Der Rotorflussbetrag wird, wie an sich hinlänglich bekannt, abhängig vom geforderten Moment, der Statorfrequenz und der Zwischenkreisspannung so vorgegeben, dass das Moment mit minimalem Statorstrom eingestellt wird und die Asynchronmaschine 8 dabei magnetisch nicht gesättigt wird. Mit steigender Statorfrequenz steigt der erforderliche Statorflussschritt, so dass beim Erreichen der Aussteuergrenze des Pulsmusters ($\alpha_{max}$) der Flussbetrag proportional zum Kehrwert der Statorfrequenz zurückgenommen werden muss, siehe weiter unten. Diese Vorgangsweise ist Stand der Technik. Auf einfache Weise kann im Flussintegrator 306 ein Speicher vorgesehen sein, in dem der berechnete Rotorfluss $\psi_R(n+1)$ abgelegt wird. Dieser Wert ist dann im nächsten Abtastschritt als aktueller Rotorfluss $\psi_R(n)$ verwendbar. Ein Momentenrechner 302 berechnet gemäß

Gl. (15) für den aktuellen Abtastschritt $nT_a$ aus dem vorgegebenen Drehmomentensollwert $m_{soll}$ und dem Rotorflussbetrag $|\psi_R|$ die drehmomentbildende Streuflusskomponente $\Delta\psi_y$ in drehfeldfesten Koordinaten.

Die Streuflussvorgabe ($\Delta\psi_x$, $\Delta\psi_y$) kann durch eine Strombegrenzungseinrichtung 303 auch derart begrenzt werden, dass eine vorgegebene Statorstromgrenze $I_{Smax}$ nicht überschritten wird. Eine nachgeschaltete Kippbegrenzungseinrichtung 304 kann die Streuflussvorgabe zusätzlich in der Weise begrenzen, dass der Kippschlupf nicht überschritten wird. Eine Strombegrenzung und eine Kippbegrenzung bei der Regelung einer Asynchronmaschine 8 sind an sich bekannt.

In einer Pulsmusterauswahleinheit 305 wird aus dem in der Kippbegrenzungseinrichtung 304 berechneten Streuflussvektor $\Delta\psi_{-,xy}$, dem Rotorflussbetrag $|\psi_R|$ und der z.B. mit dem Drehgeber 11 erfassten mechanischen Kreisfrequenz $\omega_m$ die Statorkreisfrequenz $\omega_S$ berechnet. Mit der Statorkreisfrequenz $\omega_S$, dem Messwert der Zwischenkreisspannung $u_d$ und der vom Flussintegrator 306 ermittelten Statorflussverkettung $\psi_S$ wird, wie an sich bekannt, ein geeignetes Pulsmuster PM mit der Aussteuergrenze $\alpha_{max}$ gewählt und die Abtastzeit $T_a$ für den nächsten Berechnungsschritt bestimmt. Dabei wird ein aus dem Stand der Technik bekanntes Pulsmuster PM gewählt, das abhängig von der Statorkreisfrequenz $\omega_S$ und der maximal zulässigen Schaltfrequenz des Wechselrichters 7 mit der Statorflussverkettung $\psi_S$ synchronisiert ist, oder asynchron dazu mit konstanter Schaltfrequenz schaltet.

Der Flussintegrator 306 berechnet aus der Zwischenkreisspannung $u_d$, der mechanischen Kreisfrequenz $\omega_m$, dem von der Kippbegrenzungseinrichtung 304 gebildeten Streuflussvektor $\Delta\psi_{-,xy}$, sowie den von der Pulsmusterauswahleinrichtung 305 gebildeten Größen Aussteuergrenze $\alpha_{max}$, Abtastzeit $T_a$, Statorkreisfrequenz $\omega_S$ den Statorflussschritt $\delta\psi_S$, den Rotorflussbetrag $|\psi_R|$ und die Statorflussverkettung $\psi_S$.

Ein Pulsmustergenerator 307 setzt nun den Statorflussschritt $\delta\psi_S$ mit dem Messwert der Zwischenkreisspannung $u_d$ und dem in der Pulsmusterauswahl 305 gewählten Pulsmuster PM mit einem aus dem Stand der Technik bekannten Verfahren in die drei Ansteuersignale $S_1$, $S_2$ und $S_3$ des Wechselrichters 7 um.

Da die im Zwischenkreis des Wechselrichters 7 zur Verfügung stehende Zwischenkreisspannung $u_d$ den größtmöglichen Statorflussschritt $\delta\psi_{S,max}$ bestimmt, kann vorteilhaft auch eine Schrittbegrenzung vorgesehen sein. Die betragsmäßig größte Änderung des Statorflussraumzeigers lässt sich bekanntermaßen erreichen, wenn während des gesamten Abtastintervalls einer der sechs möglichen Statorspannungraumzeiger unverändert angelegt wird, wie es bei Vollblocktaktung der Fall ist. Der Betrag dieser größtmöglichen, bei Vollblocktaktung anlegbaren Spannungszeitfläche ist $\left|\int_{nT_a}^{nT_a+T_a}\mathbf{u_S}d\tau\right|_{max,VB} = \frac{2}{3}u_d T_a$. Je nach Pulsverfahren ist mit Rücksicht auf die Mindestpulszeiten der Halbleiterschalter im Wechselrichter 7 nur ein gewisser Anteil davon nutzbar $\left|\int_{nT_a}^{nT_a+T_a}\mathbf{u_S}d\tau\right|_{max,PM} = \frac{2}{3}u_d T_a \alpha_{max}$, wobei die Aussteuer-

grenze $\alpha_{max} = \dfrac{\left|\int_{nT_a}^{nT_a+T_a}\mathbf{u_S}d\tau\right|_{max,PM}}{\left|\int_{nT_a}^{nT_a+T_a}\mathbf{u_S}d\tau\right|_{max,VB}}$ das Verhältnis der mit einem Pulsmuster maximal erzielbaren

Spannungszeitfläche zu der maximal bei Vollbocktaktung erzielbaren Spannungszeitfläche angibt. Aus den obigen Gleichungen lässt sich dann bei gegebenem, begrenztem Statorflussschritt $\delta\psi_{S,bg}$ ($|\delta\psi_{S,bg}| = \delta\psi_{S,max}$) der zulässige Streuflussvektor $\Delta\psi_{bg}$, sowie ein begrenzter Rotorfluss $\psi_{R,bg}$ und ein begrenzter Statorfluss $\psi_{S,bg}$, die sich mit dem zulässigen Streuflussvektor $\Delta\psi_{bg}$ ergeben, berechnen und damit eine Schrittbegrenzung realisieren. Da sich einerseits die erforderliche Größe des Streuflussschrittes erst im Flussintegrator 306 ergibt und andererseits der neue Rotorfluss $\psi_R(nT_a + T_a)$ nur dann erreicht wird, wenn der erforderliche Statorflussschritt $\delta\psi_S$ mit dem gewählten Pulsmuster auch ausführbar ist ($\delta\psi_S < \delta\psi_{S,bg}$), wird die Begrenzung der Statorflussschrittweite vorzugsweise bereits im Flussintegrator 306 berücksichtigt.

Die Berechnungen im Flussintegrator 306 könnten wie folgt ablaufen. Aus der Abtastzeit $T_a$, der Statorkreisfrequenz $\omega_S$, der mechanischen Kreisfrequenz $\omega_m$ und den Parametern des Maschinenmodells werden die diversen Matrizen berechnet. Aus dem im Speicher vorliegenden Rotorfluss $\psi_R(n)$ wird der Rotorflussbetrag $|\psi_R|$ berechnet. Der drehfeldfeste Streuflussvektor $\Delta\psi_{-,xy}$ wird in den statorfesten Streuflussvektor $\Delta\psi_{-,\alpha\beta}$ transformiert, z.B. durch den Einheitsvektor $\mathbf{e}_{\psi R}$ in Richtung des Rotorflusses. Damit kann der Rotorflussvektor $\psi_R(n+1)$ des nächsten Abtastschrittes (n+1) aus dem Streuflussvektor $\Delta\psi_{-,\alpha\beta}$ und dem, z.B. vom Speicher zur Verfügung gestellten, aktuellen Rotorflussvektor $\psi_R(n)$ berechnet werden. Somit kann aus dem Streuflussvektor $\Delta\psi_{-,\alpha\beta}$ und dem ermittelten Rotorflussvektor $\psi_R(n+1)$ die Statorflussverkettung $\psi_S(n+1)$ des nächsten Abtastschrittes (n+1), sowie mit der, z.B. vom Speicher zur Verfügung gestellten aktuellen Statorflussverkettung $\psi_S(n)$, der im nächsten Abtastschritt (n+1) auszuführenden Statorflussschritt $\delta\psi_S(n+1)$ ermittelt werden.

Eine gegebenenfalls vorhandene Schrittbegrenzungseinrichtung ermittelt aus der Statorflussverkettung $\psi_S(n+1)$, dem Rotorfluss $\psi_R(n+1)$ und dem gewünschten Statorflussschritt $\delta\psi_S(n+1)$ einen begrenzten Statorflussschritt $\delta\psi_{S,bg}(n+1)$, der vom Pulsmustergenerator unter Berücksichtigung der Zwischenkreisspannung $u_d$, der Abtastzeit $T_a$ und der Aussteuergrenze $\alpha_{max}$ im nächsten Abtastschritt (n+1) ausgeführt wird. Zufolge der Begrenzung des Statorflussschrittes $\delta\psi_{S,bg}(n+1)$ werden die berechneten Rotor- und Statorflussverkettungen im Abtastschritt (n+1) nicht erreicht, weshalb ausgehend von $\delta\psi_{S,bg}(n+1)$ auf den begrenzten Streuflussvektor $\Delta\psi_{bg}(n+1)$ rückgerechnet wird. Mit diesem begrenzten Streuflussvektor $\Delta\psi_{bg}(n+1)$ werden dann nochmals die Rotor- und Statorflussverkettungen berechnet, die sich bei wirksamer Begrenzung für den Abtastschritt (n+1) ergeben.

Eine Feedforward-Regelung benötigt ein möglichst exaktes Maschinenmodell. Dazu kann auch vorgesehen sein, die Parameter des Maschinenmodells im Betrieb online nachzuführen. Dazu ist eine Parameteradaptionseinheit 308 vorgesehen, die aus dem gemessenen Statorstromraumzeiger $i_{Smess}$, der Statorfrequenz $\omega_S$, der mechanischen Kreisfrequenz $\omega_m$ und dem aus Zwischenkreisspannung $u_d$ und Ansteuersignalen $S_1$, $S_2$ und $S_3$ gebildeten Statorspannungsraumzeiger die Maschinenparameter identifiziert und die Modellparameter Statorwiderstand $r_S$, Rotorwiderstand $r_R$, Statorinduktivität $l_S$ und Streuinduktivität $l_\sigma$ abhängig vom Betriebszustand der Asynchronmaschine 8 entsprechend nachführt. D.h., dass die Parameter für den jeweils nächsten Abtastschritt neu berechnet werden. Dabei kommen aus dem Stand der Technik an sich bekannte Verfahren zum Einsatz, die hier nicht näher erläutert werden. Im Allgemeinen ist dies aber nicht erforderlich, sondern es reicht aus, die Parameter in einem langsameren Task nachzuführen, da sich der Betriebszustand der Asynchronmaschine 8 von dem die Parameter abhängen (wie Temperatur, Fluss) nicht so schnell ändert wie die Drehmomentendynamik. Die Parameteradaption kann damit in einem langsameren Task berechnet werden als die Maschinenregelung.

Die Regelung 9 wird bevorzugt in einer Einheit, z.B. einem Mikroprozessor, einem DSP, einer speicherprogrammierbare Einheit, etc., realisiert.

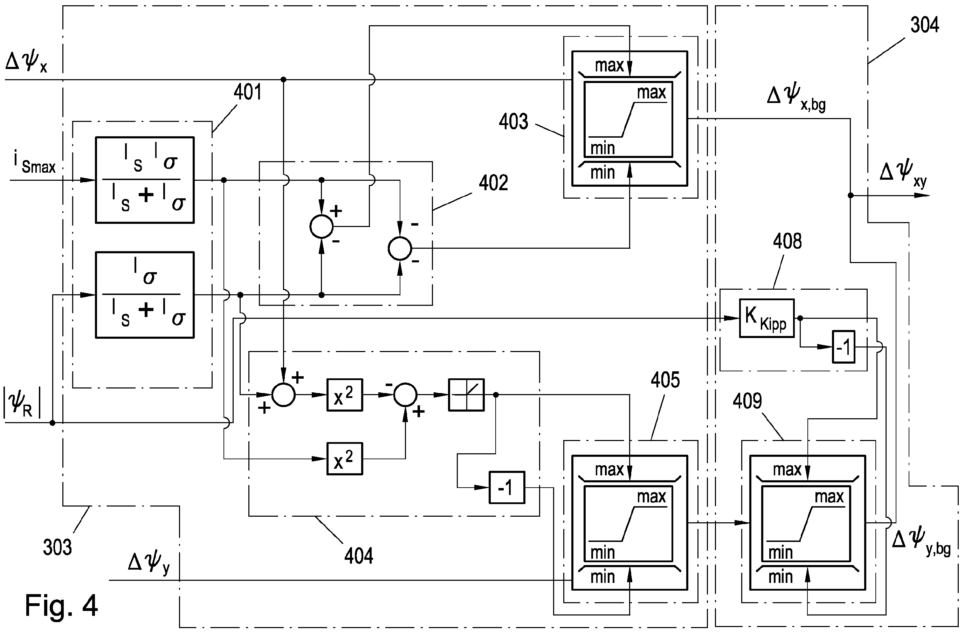

Eine beispielhafte Strombegrenzungseinrichtung 303 wird mit Bezugnahme auf die Fig.4 näher erläutert. Zur Strombegrenzung wird näherungsweise der Stromanteil zufolge der Eisenverluste vernachlässigt ($i_S \approx i_{Si}$, $i_{Fe} \approx 0$) und der Statorstrom $i_{Si}$ gemäß Gl. (14) durch die Flussverkettungen ausgedrückt. Setzt man weiters für die Statorflussverkettung $\psi_S = \psi_R + \Delta\psi$ an, so lässt sich die Streuflussverkettung durch den Statorstrom und den Rotorfluss zu

$$\underline{\Delta\psi} = \frac{l_\sigma}{l_S + l_\sigma}\left(l_S \underline{i}_S - \underline{\psi}_R\right)$$ ausdrücken. An der Stromgrenze $\underline{i}_S = I_{Smax}e^{j\varphi}$ mit $\varphi \in [0, 2\pi]$ durchläuft der Streufluss einen Kreis, dessen Mittelpunkt auf der x-Achse bei $-\frac{l_\sigma}{l_S+l_\sigma}\left|\underline{\psi}_R\right|$ liegt und einen Radius von $\frac{l_\sigma}{l_S+l_\sigma}I_{S\max}$ aufweist. Der Statorstrom bleibt folglich kleiner als $I_{Smax}$ solange der Streuflussraumzeiger $\underline{\Delta\psi}$ innerhalb dieses Kreises bleibt. Die feldbildende Komponente $\Delta\psi_x$ des Streuflusses kann daher auf das Intervall

$$\frac{l_\sigma}{l_S + l_\sigma}\left(-l_S I_{S\max} - \left|\underline{\psi}_R\right|\right) \le \Delta\psi_x \le \frac{l_\sigma}{l_S + l_\sigma}\left(l_S I_{S\max} - \left|\underline{\psi}_R\right|\right)$$ begrenzt werden. Die momentenbildende Komponente $\Delta\psi_y$ kann auf das Intervall $-\Delta\psi_{ymax} \le \Delta\psi_y \le \Delta\psi_{ymax}$ mit

$$\Delta\psi_{y\max} = \sqrt{\left(\frac{l_\sigma l_S}{l_S + l_\sigma}I_{S\max}\right)^2 - \left(\Delta\psi_x + \frac{l_\sigma}{l_S + l_\sigma}\left|\underline{\psi}_R\right|\right)^2}$$ begrenzt werden, sofern das Wurzelargument positiv ist. Für $\Delta\psi_x + \frac{l_\sigma}{l_S+l_\sigma}\left|\underline{\psi}_R\right| > \frac{l_\sigma l_S}{l_S+l_\sigma}I_{S\max}$ kann $\Delta\psi_y = 0$ gesetzt werden. Ausgehend davon wird in einer Rechenschaltung 401 (z.B. ein Mikroprozessor, ein DSP, eine speicherprogrammierbare Einheit, etc.) die Statorstromgrenze $I_{Smax}$ mit dem Faktor $l_S l_\sigma / (l_S + l_\sigma)$ und der Rotorflussbetrag $|\psi_R|$ mit dem Faktor $l_\sigma / (l_S + l_\sigma)$ multipliziert. Mit diesen Hilfsgrößen am Ausgang von Rechenschaltung 401 werden in der Rechenschaltung 402 die Intervallgrenzen für $\Delta\psi_x$ berechnet, mit denen in der Begrenzungseinrichtung 403 die feldbildende Streuflusskomponente $\Delta\psi_x$ begrenzt wird. In der Rechenschaltung 404 werden die Intervallgrenzen für $\Delta\psi_y$ berechnet, mit denen in der Begrenzungseinrichtung 405 die drehmomentenbildende Streuflusskomponente $\Delta\psi_y$ begrenzt wird.

Weiters wird unter Bezugnahme auf das Blockschaltbild in Fig.4 eine beispielhafte Kippbegrenzung beschrieben. Wird die Asynchronmaschine 8 an der Aussteuergrenze des Wechselrichters 7 betrieben, so kann der Betrag des Statorflusses nicht weiter gesteigert werden. Eine Erhöhung der momentenbildenden Statorflusskomponente $\psi_{Sy} = \Delta\psi_y$ ist nur mehr auf Kosten der feldbildenden Statorflusskomponente $\psi_{Sx} = |\psi_R| + \Delta\psi_x$ möglich. Bei stationären Feldverhältnissen $\Delta\psi_x = 0$ ist $\psi_{Sx} = |\psi_R|$ und mit dem durch die Zwischenkreisspannung $u_d$ und das gewählte Pulsmuster PM an der Aussteuergrenze eingefrorenen Statorflussbetrag $|\psi_S|$ ergibt sich für das Drehmoment

$$m = \frac{1}{l_\sigma}\Delta\psi_y\left|\underline{\psi}_R\right| = \frac{1}{l_\sigma}\psi_{Sy}\sqrt{\left|\underline{\psi}_S\right|^2 - \psi_{Sy}^2} \ . \quad \text{Es erreicht seinen größtmöglichen Wert folglich bei}$$

$$\frac{dm}{d\psi_{Sy}} = -\frac{2\psi_{Sy}^2 - \left|\underline{\psi}_S\right|^2}{\sqrt{\left|\underline{\psi}_S\right|^2 - \psi_{Sy}^2}} = 0 \ , \text{ also bei } \quad \psi_{Sy} = \frac{\left|\underline{\psi}_S\right|}{\sqrt{2}} \quad \text{bzw. } \psi_{Sy} = \psi_{Sx}. \text{ Mit steigender drehmomentbildender Stator-}$$

flusskomponente $\psi_{Sy}$ steigt das Drehmoment an und die feldbildende Statorflusskomponente $\psi_{Sx}$ muss wegen der Aussteuerbegrenzung reduziert werden. Bei der Kippgrenze $\psi_{Sy} = \psi_{Sx}$ erreicht das Drehmoment mit dem so genannten Kippmoment seinen Maximalwert. Wenn der Rotorschlupf weiter gesteigert werden soll, muss die feldbildende Statorflusskomponente $\psi_{Sx}$ kleiner als die drehmomentbildende Statorflusskomponente $\psi_{Sy}$ werden und das Drehmoment sinkt trotz Schlupferhöhung wieder unter das Kippmoment. Die Kippbegrenzung muss somit die Bedingung $\psi_{Sy} < \psi_{Sx}$ sicherstellen, was im Stationärbetrieb gleichbedeutend mit der Begrenzung der momentenbildenden Streuflusskomponente $\Delta\psi_y$ auf $-k_{Kipp}|\psi_R| \leq \Delta\psi_y \leq k_{Kipp}|\psi_R|$ mit $0 < k_{Kipp} < 1$ ist. Das ist in der Kippbegrenzungseinrichtung 304 realisiert. In der Rechenschaltung 408 werden aus dem Rotorflussbetrag $|\psi_R|$ die Intervallgrenzen berechnet, mit denen in der Begrenzungseinrichtung 409 die drehmomentenbildende Streuflusskomponente $\Delta\psi_y$ begrenzt wird.

Mit den begrenzten Streuflusskomponenten an den Ausgängen der Begrenzungseinrichtungen 403 und 409 steht der begrenzte Streuflussvektor $\Delta\psi_{-,xy,bg} = (\Delta_{\psi'bg} \ \Delta\psi_{y,bg})^T$ für die weitere Verarbeitung zur Verfügung.

## Patentansprüche

1. Verfahren zur Steuerung des Drehmomentes einer Asynchronmaschine, **dadurch gekennzeichnet, dass** in statorfesten Koordinaten (a,β) ausgehend von einem im nächsten Abtastschritt (n+1) anzulegenden Streuflussvektor ($\Delta\psi\_(n+1)$), einer gemessenen mechanischen Kreisfrequenz ($\omega_m$) und einem aktuellen Rotorfluss ($\psi_R(n)$) und Statorfluss ($\psi_S(n)$) ein im nächsten Abtastschritt (n+1) auszuführende Statorflussschritt ($\delta\psi_S(n+1)$) zur Erreichung eines Soll-Drehmoments, sowie ein Rotorfluss ($\psi_R(n+1)$) und Statorfluss ($\psi_S(n+1)$) für den nächsten Abtastschritt (n+1) berechnet wird.

2. Verfahren nach Anspruch 1, **dadurch gekennzeichnet, dass** orientiert am aktuellen Rotorfluss ($\psi_R(n)$) der anzulegende Streuflussvektor ($\Delta\psi\_(n+1)$) mit einer feldbildenden Streuflusskomponente ($\Delta\psi_x$) in Richtung des aktuellen Rotorflusses und einer drehmomentenbildenden Streuflusskomponente ($\Delta\psi_y$) normal stehend auf die Richtung des aktuellen Rotorflusses berechnet wird.

3. Verfahren nach Anspruch 2, **dadurch gekennzeichnet, dass** der Streuflussvektor ($\Delta\psi$) begrenzt wird, um einen größtmöglichen, ausführbaren Statorflussschritt ($\delta\psi_S(n+1)$) einzuhalten.

4. Verfahren nach einem der Ansprüche 1 bis 3, **dadurch gekennzeichnet, dass** der Streuflussvektor ($\Delta\psi$) in einer Strombegrenzungseinrichtung begrenzt wird, sodass eine vorgegebene Statorstromgrenze eingehalten wird.

5. Verfahren nach einem der Ansprüche 1 bis 4, **dadurch gekennzeichnet, dass** der Streuflussvektor ($\Delta\psi$) in einer Kippbegrenzungseinrichtung begrenzt wird, sodass eine vorgegebene Kippgrenze eingehalten wird.

**Claims**

1. A method for controlling the torque of an asynchronous machine, **characterized in that** a stator flux step ($\delta\psi_S(n+1)$), that is to be applied during the next scanning step (n+1) in order to achieve a setpoint torque, as well as a rotor flux $\psi_R(n+1)$ and stator flux ($\psi_S(n+1)$) for the next scanning step (n+1) are calculated in stator-fixed coordinates ($\alpha$, $\beta$) on the basis of a flux leakage vector ($\Delta\psi\_(n+1)$) that is to be applied during the next scanning step (n+1), a measured mechanical angular frequency ($\omega_m$) and a current rotor flux ($\psi_R(n)$) and stator flux ($\psi_S(n)$).

2. The method according to claim 1, **characterized in that,** using the current rotor flux ($\psi_R(n)$) for orientation, the flux leakage vector ($\Delta\psi\_(n + 1)$) that is to be applied, having a field-generating flux leakage component ($\Delta\psi_x$) in the direction of the current rotor flux and a torque-generating flux leakage component ($\Delta\psi_y$) running normal to the direction of the current rotor flux, is calculated.

3. The method according to claim 2, **characterized in that** the flux leakage vector ($\Delta\psi$) is limited in order to apply with the largest possible stator flux step ($\delta\psi_S(n+1)$) that can be carried out.

4. The method according to one of claims 1 through 3, **characterized in that** the flux leakage vector ($\Delta\psi$) is limited in a current-limiting system so that a prescribed stator current limit is not exceeded.

5. The method according to one of claims 1 through 4, **characterized in that** the flux leakage vector ($\Delta\psi$) is limited in a tilt-limiting system so that a prescribed tilt limit is not exceeded.


**Revendications**

1. Procédé de commande du couple de torsion d'une machine asynchrone, **caractérisé en ce que**, dans des coordonnées fixes ($\alpha$, $\beta$) du stator, en partant d'un vecteur de flux de dispersion ($\Delta\psi\_(n+1)$) à établir à l'étape de balayage suivante (n+1), d'une fréquence angulaire mécanique mesurée ($\omega_m$) et d'un flux rotorique ($\psi_R(n)$) et d'un flux statorique ($\psi_S(n)$) actuels, on calcule une étape de flux statorique ($\delta\psi_s(n+1)$) à mettre en oeuvre à l'étape de balayage suivante (n+1) pour atteindre un couple de torsion théorique ainsi qu'un flux rotorique ($\psi_R(n+1)$) et un flux statorique ($\psi_S(n+1)$) pour l'étape de balayage suivante (n+1).

2. Procédé selon la revendication 1, **caractérisé en ce que**, en s'orientant sur le flux rotorique actuel ($\psi_R(n)$), on calcule le vecteur de flux de dispersion à établir ($\Delta\psi\_(n+1)$) avec une composante de flux de dispersion formatrice de champ ($\Delta\psi_x$) dans la direction du flux rotorique actuel et une composante de flux de dispersion formatrice de couple de torsion ($\Delta\psi_y$) qui est normale à la direction du flux rotorique actuel.

3. Procédé selon la revendication 2, **caractérisé en ce que** le vecteur de flux de dispersion ($\Delta\psi$) est limité afin d'observer une étape de flux statorique ($\delta\psi_s(n+1)$) réalisable la plus grande possible.

4. Procédé selon l'une quelconque des revendications 1 à 3, **caractérisé en ce que** le vecteur de flux de dispersion ($\Delta\psi$) est limité dans un dispositif de limitation de courant de sorte qu'une limite de courant statorique prédéterminée soit observée.

5. Procédé selon l'une quelconque des revendications 1 à 4, **caractérisé en ce que** le vecteur de flux de dispersion ($\Delta\psi$) est limité dans un dispositif de limitation de retour de sorte qu'une limite de retour prédéterminée soit observée.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 674381 A1
- DE 10336068 A1
- DE 3903536 A1
- US 5371458 A